(19) **Europäisches Patentamt / European Patent Office / Office européen des brevets**

(11) **EP 4 517 382 A1**

(12) **EUROPÄISCHE PATENTANMELDUNG**

(43) Veröffentlichungstag:
05.03.2025 Patentblatt 2025/10

(21) Anmeldenummer: 24196113.5

(22) Anmeldetag: 23.08.2024

(51) Internationale Patentklassifikation (IPC):
**G01S 13/90** $^{(2006.01)}$

(52) Gemeinsame Patentklassifikation (CPC):
**G01S 13/9023; G01S 7/417; G01S 13/904**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: 04.09.2023 DE 102023123694

(71) Anmelder:
• **Deutsches Zentrum für Luft- und Raumfahrt e.V.**
**53227 Bonn (DE)**

• **Universität der Bundeswehr**
**85579 Neubiberg (DE)**

(72) Erfinder:
• **Pulella, Andrea**
**82205 Gilching (DE)**
• **Prats-Iraola, Pau**
**82205 Gilching (DE)**
• **Sica, Francescopaolo**
**85579 Neubiberg (DE)**

(74) Vertreter: **Fink Numrich**
**Patentanwälte PartmbB**
**Paul-Gerhardt-Allee 24**
**81245 München (DE)**

(54) **VERFAHREN ZUR RECHNERGESTÜTZTEN ERZEUGUNG EINES DATENGESTÜTZTEN MODELLS ZUR RECHNERGESTÜTZTEN VERARBEITUNG DIGITALER SAR-DATEN**

(57) Die vorliegende Erfindung betrifft ein Verfahren zur rechnergestützten Erzeugung eines datengestützten Modells für die rechnergestützte Verarbeitung von digitalen SAR-Daten eines Repeat-Pass-SAR-Systems, das zur Bestimmung von Oberflächendeformationen eingerichtet ist. Die digitalen SAR-Daten bestehen aus einer Vielzahl von Interferogrammen ($\Gamma$), von denen jedes aus einer ersten SLC-Erfassung ($s_1$) des SAR-Systems zu einem ersten Zeitpunkt und einer zweiten SLC-Erfassung ($s_2$) des SAR-Systems zu einem zweiten Zeitpunkt, der später als der erste Zeitpunkt ist, erhalten wird, und einer Doppler-Schwerpunktfrequenz ($f_{dc}$), einer interferometrischen Phase ($\hat{\phi}$) und einer Kohärenz (P), die alle aus einem jeweiligen Paar von ersten und zweiten SLC-Erfassungen ($s_1$, $s_2$) erhalten werden. Das datengestützte Modell ist so eingerichtet, eine Null-Doppler-Phase ($\phi_{zd}$), die den Phasenbeitrag darstellt, der der Deformation zugeordnet ist, die eine Null-Doppler-LOS-Änderung verursacht, eine Along-Track-Phase ($\phi_{at}$), die den Phasenbeitrag darstellt, der der Deformation in einer Along-Track-Richtung zugeordnet ist, und eine Schätzung einer zugeordneten Along-Track-Oberflächenbewegung ($u_{at}$) zu bestimmen. Die Erzeugung des datengestützten Modells umfasst die folgenden Schritte:
- Erzeugen eines synthetischen Trainingsdatensatzes (TDS), der eine Vielzahl von Interferogrammen ($\Gamma$) umfasst, von denen jedes durch ein Paar einer ersten und einer zweiten SLC-Erfassung ($s_1$, $s_2$) gebildet wird, indem eine modellbasierte und externe 3D-Deformation in eine gegebene erste SLC-Erfassung ($s_1$) induziert wird, um die zugehörige zweite SLC-Erfassung ($s_2$) zu erhalten, die sich auf einen Zeitpunkt nach einem Deformationsereignis bezieht, und durch Anwenden eines umgekehrten Ansatzes, der durch eine gegebene Kohärenz ($\rho$) und eine rauschfreie interferometrische Phase ($\phi_{theo}$) nach dem Deformationsereignis spezifiziert ist;
- Trainieren eines neuronalen Netzwerks (NN) mit dem Trainingsdatensatz (TDS), wobei das neuronale Netzwerk (NN) einen Eingang zur Eingabe der Vielzahl von Interferogrammen ($\Gamma$) und einen Ausgang zur Ausgabe der Along-Track-Phase ($\Phi_{at}$), der Null-Doppler-Phase ($\phi_{zd}$) und der zugehörigen Along-Track-Oberflächenbewegung ($u_{at}$) für die Vielzahl von Interferogrammen ($\Gamma$) umfasst, wobei das trainierte neuronale Netz (NN) das erzeugte datengestützte Modell darstellt.

Fig. 1

EP 4 517 382 A1

**Beschreibung**

Die Erfindung bezieht sich auf ein Verfahren zur rechnergestützten Erzeugung eines datengestützten Modells für die rechnergestützte Verarbeitung digitaler SAR-Daten sowie auf ein Verfahren zur rechnergestützten Verarbeitung digitaler SAR-Daten und ein Computerprogrammprodukt.

Terrain Observation by Progressive Scans (TOPS) ist ein Erfassungsmodus, der in einigen modernen Synthetic Aperture Radar (SAR)-Bildgebungssystemen verwendet wird, um die Abdeckung auf Kosten der Azimutauflösung zu erhöhen. Die Antenne des SAR-Systems verwendet einen elektronischen Strahlsteuerungsmechanismus, um die gesendeten und empfangenen Signale auf ein bestimmtes Geländegebiet zu lenken. Die Besonderheit des TOPS-Modus ist die Erfassung von Bursts durch Steuerung des Antennenstrahls in Flugrichtung von hinten nach vorne.

Sentinel-1 (S-1) ist die Satellitenkonstellation der Europäischen Weltraumorganisation (ESA) für die SAR-Technologie, die hauptsächlich im TOPS-Erfassungsmodus arbeitet: Sie beobachtet die Erdoberfläche kontinuierlich mit einem Wiederholungsdurchlauf (Repeat-Pass) von 6 bis 12 Tagen und überwacht Oberflächendeformationen (Versätze) mithilfe der bekannten DInSAR-Technik (Differential Interferometrie Synthetic Aperture Radar).

Bei DInSAR werden zwei SAR-Bilder desselben Gebiets zu unterschiedlichen Zeiten aufgenommen. Die Phasendifferenz zwischen den beiden Bildern bestimmt die Oberflächenbewegung entlang der Sichtlinie (LOS), d. h. die Richtung vom Satelliten zum abgebildeten Oberflächenpunkt. Immer wenn S-1 im TOPS-Modus aufnimmt, erzeugt der "Beam Swap" entlang der Flugbahn auch eine variable Empfindlichkeit des interferometrischen Systems entlang dieser Richtung. Insbesondere nimmt die Empfindlichkeit für die Bewegung entlang der Spur (along-track) in der Szene zu, wenn der absolute Wert des Azimut-Schielwinkels zunimmt (am Anfang und Ende des Bursts), sodass sie in der Mitte des Bursts null Empfindlichkeit aufweist.

Diese variierende Empfindlichkeit ist von Nachteil, da sie Phasensprünge zwischen benachbarten Bursts erzeugt, die die korrekte Phasenabfrage in Querrichtung (across-track) stören und möglicherweise auch den Schritt der Phasenabwicklung (phase unwrapping) stören können. Andererseits kann diese Eigenschaft genutzt werden, um Versätze in der Along-Track-Richtung nahe dem Anfang und dem Ende eines Bursts zu ermitteln, vorausgesetzt, der Phasensprung kann korrekt geschätzt werden. Die Fähigkeit, die von den beiden Versatzrichtungen erzeugten Phasenquellen korrekt zu trennen, ermöglicht es erstens, die Phase in der Across-Track-Richtung korrekt abzuwickeln und die entsprechende Deformation zu berechnen, und zweitens, einen Proxy für die Inversion der Along-Track-Deformation bereitzustellen.

Es wurden zwei Methoden vorgeschlagen, um das Problem der Quellentrennung in der interferometrischen TOPS-Phase zu lösen.

In [1] wird zunächst eine lokale Coregistrierung durchgeführt, um Phasendiskontinuitäten zu reduzieren und die Kohärenz zu erhöhen. Insbesondere besteht diese Strategie aus der Bewertung von Entfernungs- und Azimutversätzen unter Verwendung der Inkohärenz-Kreuzkorrelationstechnik (ICC) für nicht stationäre Szenarien, gefolgt von einer erneuten Abtastung des Sekundärbildes im Primärraster und einer zusätzlichen Verfeinerung, die aus einer räumlich eingerichteten Entfernungs- und Azimutverschiebungsmessung unter Verwendung der Spektraldiversitätstechnik (SD) besteht. Diese Lösung vereinfacht die Phasenabwicklung, da die Interferogramme keine Phasensprünge mehr aufweisen, beeinträchtigt jedoch die interferometrische Phasenqualität, da die Schätzung der Verschiebungen weniger genau und aufgelöst ist als die interferometrische Phase. Nach der Phasenabwicklung kann die Residualphase, die implizit im Schritt der Coregistrierung subtrahiert wurde, wieder zum Interferogramm hinzugefügt werden, wodurch die volle interferometrische Qualität für die abgewickelte Phase wiederhergestellt wird. Daher wird in der Referenz [1] die Speckle-Verfolgung als mögliche Lösung vorgeschlagen. Dieser Ansatz funktioniert nur bei extrem großen Versätzen, bei denen die interferometrische Phaseninformation nicht verwendet werden kann. Bei kleinen Versätzen hat er jedoch den Nachteil, dass er das Rauschen der interferometrischen Phase für Bereiche mit geringer Qualität (geringe interferometrische Kohärenz) erhöhen kann.

Alternativ dazu wird in [2] eine Methodik vorgeschlagen, bei der das differentielle Interferogramm in jedem überlappenden Bereich der Szene verwendet wird, um einen Bild-Inpainting-Algorithmus zu initialisieren, der die fehlenden Bereiche, d. h. die Lücken zwischen den Überlappungen, mit einem Versatz ausfüllt, der anhand eines digitalen Höhenmodells (DEM) geschätzt wird. Als Ergebnis wird die interferometrische Null-Doppler-Phase zurückgegeben. Daher wird vorgeschlagen, Überlappungsbereiche der Bursts zu verwenden, um den Versatz nur in diesem Bereich zu schätzen. Obwohl die in den Überlappungsbereichen vorhandenen Informationen zuverlässig sind, erfordert die Tatsache, dass die Überlappungsbereiche im Verhältnis zum Burst so klein sind, eine weitere Verarbeitung, wie z. B. Inpainting/Interpolation, um die Informationen von der Überlappung auf den gesamten Burst auszudehnen. Diese Technik hat mehrere Nachteile: (a) Das Verfahren zur Versatzschätzung erfordert eine fehleranfällige 2D-Phasenabwicklung (2D-phase unwrapping), (b) der Überlappungsbereich ist im Vergleich zum Burst sehr klein, sodass der Versatz im Burst ignoriert wird, indem die Informationen aus der Überlappung durch Kontinuität auf den Burst erweitert werden, (c) die Rechenkomplexität ist höher als bei allen anderen Algorithmen auf dem neuesten Stand der Technik. Daher liefert diese Technik in den Überlappungsbereichen bessere Ergebnisse als die in [1] offenbarten, kann aber dennoch Phasensprünge und ungenaue Versatzschätzungen aufweisen.

In [3] wird die Synergie von Orbitrichtungen (absteigend und aufsteigend) und geometrischen Komponenten (entlang und quer zur Flugbahn) für die Erfassung vollständiger 3D-Oberflächenversatzfelder über seismischen Gebieten vorgeschlagen. Nach globalen Verfeinerungen der Azimutversätze werden Interferogramme abgeflacht, indem eine bilineare polynomiale Oberfläche an die Differenz zwischen externen GPS-Messungen, die auf die entsprechende Geometrie (entlang oder quer zur Flugbahn) projiziert werden, und dem nächstgelegenen Pixel im Interferogramm angepasst wird. Dadurch werden Lücken zwischen den Bursts in jeder der vier interferometrischen Phasen gefüllt und Phasenabwicklung für die Versatzmessung angewendet.

In [4] und [5] wird eine modifizierte Sentinel-1-Interferometerkette vorgeschlagen, die die Azimutkopplung zur LOS-Richtung durch eine verfeinerte Coregistrierung reduziert. Insbesondere werden Offset-Matrizen unter Verwendung eines externen DEM berechnet und die x- und y-Komponenten der mehrjährigen durchschnittlichen Eisgeschwindigkeitskarte werden vom Geologischen Dienst von Dänemark und Grönland (GEUS) verteilt. Infolgedessen reduziert die Verwendung des aktualisierten DEM die in der interferometrischen Phase beobachteten Phasensprünge und verbessert die Kohärenz in den überlappenden Bereichen.

Externe Referenzen, wie z. B. GPS-Messungen, wie sie in [3] verwendet werden, oder Karten mit mehrjährigen Durchschnitts-Eisgeschwindigkeiten, wie sie in [4] und [5] verwendet werden, die in der Regel zur Unterstützung satellitengestützter Lösungen verwendet werden, leiden unter den folgenden Problemen: (a) sie sind rar, (b) sie werden nicht aktualisiert, (c) sie sind nicht immer frei verfügbar und (d) ihre Genauigkeit reicht in den meisten Fällen nicht aus, um genaue interferometrische Messungen zu erhalten.

Aufgabe der vorliegenden Erfindung ist es, ein verbessertes Verfahren zur interferometrischen Phasenquellentrennung unter Verwendung der Geländebeobachtung im Progressive-Scans-Modus (TOPS) bereitzustellen.

Dieses Aufgabe wird durch das Verfahren zur rechnergestützten Erzeugung eines datengestützten Modells gemäß Anspruch 1, das Verfahren zur rechnergestützten Verarbeitung digitaler SAR-Daten gemäß Patentanspruch 16, die Vorrichtung zur rechnergestützten Verarbeitung digitaler SAR-Daten gemäß Patentanspruch 17 und das Computerprogrammprodukt gemäß Patentanspruch 18 gelöst. Weitere Ausführungsformen der Erfindung sind in den abhängigen Ansprüchen definiert.

Gemäß einem ersten Aspekt der vorliegenden Erfindung wird ein Verfahren zur rechnergestützten Erzeugung eines datengestützten Modells für die rechnergestützte Verarbeitung digitaler SAR-Daten eines Repeat-Pass-SAR-Systems (SAR-System mit wiederholt durchgeführten Überflügen) vorgeschlagen. Das SAR-System ist für die Ausführung von Terrain Observation by Progressive Scans (TOPS) als Erfassungsmodus eingerichtet und dient somit der Bestimmung von Oberflächendeformationen in einem bestimmten Gebiet. Das datengestützte Modell in Form eines neuronalen Netzwerks wird für die interferometrische Phasenquellentrennung verwendet. Mit anderen Worten soll das datengestützte Modell die vom SAR-System bereitgestellten digitalen SAR-Daten verarbeiten.

Die digitalen SAR-Daten bestehen aus einer Vielzahl von Interferogrammen, die jeweils aus einer ersten SLC-Erfassung des SAR-Systems zu einem ersten Zeitpunkt und einer zweiten SLC-Erfassung des SAR-Systems zu einem zweiten Zeitpunkt, der später als der erste Zeitpunkt liegt, erhalten werden. Wie dem Fachmann allgemein bekannt ist, werden bei der Single-Look-Complex-Verarbeitung (SLC) die Daten in Azimut und Entfernung (Range) fokussiert, um ein Bild zu erzeugen. Die digitalen SAR-Daten bestehen ferner aus einer Doppler-Schwerpunktfrequenz, einer interferometrischen Phase und einer Kohärenz, die alle aus einem jeweiligen Paar von ersten und zweiten SLC-Erfassungen erhalten werden.

Das datengestützte Modell ist so eingerichtet, dass es eine Null-Doppler-Phase als den Phasenbeitrag bestimmt, der der Deformation zugeordnet ist, die eine Null-Doppler-LOS-Variation verursacht, d. h. die Projektion der Deformationen entlang der vertikalen Richtung, eine Along-Track-Phase als den Phasenbeitrag, der der Deformation in einer Along-Track-Richtung zugeordnet ist, und eine Schätzung einer zugeordneten Along-Track-Oberflächenbewegung.

Die Erstellung des datengestützten Modells umfasst die folgenden Schritte:
Zunächst wird ein synthetischer Trainingsdatensatz generiert, der aus einer Vielzahl von Interferogrammen besteht. Jedes der Interferogramme wird durch ein Paar aus einer ersten und einer zweiten SLC-Erfassung gebildet, indem eine modellbasierte und externe 3D-Deformation in eine gegebene erste SLC-Erfassung induziert wird, um die zugeordnete zweite SLC-Erfassung zu erhalten, die sich auf einen Zeitpunkt nach einem Deformationsereignis bezieht, und indem ein umgekehrter Ansatz angewendet wird, der durch eine gegebene Kohärenz und eine rauschfreie interferometrische Phase nach dem Deformationsereignis spezifiziert ist. Das Ereignis der Deformation kann beispielsweise ein Erdbeben oder ein Gletscherfluss in dem Gebiet sein, in dem die erste Erfassung stattgefunden hat.

Nach der Generierung des synthetischen Trainingsdatensatzes wird ein neuronales Netz mit dem Trainingsdatensatz trainiert. Das neuronale Netz umfasst einen Eingang, über den die Vielzahl der vorverarbeiteten Interferogramme eingegeben wird, um die Doppler-Schwerpunktfrequenz, die interferometrische Phase und die Kohärenz zu erhalten. Das neuronale Netz umfasst ferner einen Ausgang, über den die Along-Track-Phase, die Null-Doppler-Phase und die zugeordnete Along-Track-Oberflächenbewegung für die Vielzahl der Interferogramme ausgegeben werden. Das trainierte neuronale Netz stellt das generierte datengestützte Modell dar.

Die Erfindung hat den Vorteil, dass die Phasenquellentrennung ohne die explizite Implementierung einer Regel und ohne die Verwendung von a priori-Informationen durchgeführt werden kann. Zu diesem Zweck wird ein entsprechend angelerntes neuronales Netz verwendet, das bei Bedarf flexibel angepasst werden kann, indem es erneut trainiert wird, wenn neue vorab bekannte Datensätze verfügbar sind. Die Erfindung kann vorzugsweise für SAR-Systeme verwendet werden, die TOPS als Erfassungsmodus verwenden.

Im Allgemeinen basiert die Erzeugung des synthetischen interferometrischen Erfassungspaars auf der Anwendung eines "umgekehrten Ansatzes" ("reverse approach"). Bei gegebener gewünschter Kohärenz und rauschfreier interferometrischer Phase nach dem Deformationsereignis induziert das Signalmodell die Deformation (auch als Versatz bezeichnet) in der zweiten SLC-Erfassung, die nach einem Deformationsereignis angenommen wird. Es garantiert daher Daten, die für die spezifische Bewegung bestimmt sind. Dies geschieht durch die Simulation typischer Verhaltensweisen, die in realen InSAR-Daten auftreten, die die erste SLC-Erfassung darstellen.

Gemäß einer bevorzugten Ausführungsform werden zur Erzeugung des synthetischen Trainingsdatensatzes die erste und zweite SLC-Erfassung definiert durch:

$$\begin{cases} s_1 = A_0 w_1 \\ s_2 = s_1 \rho^* e^{j\phi_{theo}} + A_0 w_2 \sqrt{1 - \rho^2} \end{cases}$$

wobei

$s_1$ und $s_2$ die coregistrierten ersten und zweiten SLC-Erfassungen sind,
$A_0$ eine rauschfreie Amplitude ist,
$\rho$ die gegebene Kohärenz ist,
$w_1$ und $w_2$ unabhängige zirkuläre komplexe Standard-Gauß-Variablen sind und
$\phi_{theo}$ die rauschfreie Wrapped-Phase-Summe der Null-Doppler-Phase ($\phi_{zd}$) und der Along-Track-Phase ($\phi_{at}$), die zwei Deformationen darstellen.

Die rauschfreie Wrapped-Phase-Summe $\phi_{theo}$ wird bestimmt durch:

$$\phi_{theo} = mod_{2\pi}(\phi_{zd} + \phi_{at}),$$

wobei die Along-Track-Phase $\phi_{at}$ der Phasenbeitrag ist, der der Deformation in der Along-Track-Richtung zugeordnet ist, definiert durch:

$$\phi_{zd} = \frac{4\pi}{\lambda} \left[ \sin(\theta_{inc}) \sin(\theta_N) u_E + \sin(\theta_{inc}) \cos(\theta_N) u_N - \cos(\theta_{inc}) u_U \right]$$

In dieser Gleichung ist $f_{dc}$ die Doppler-Schwerpunktfrequenz und $v_g$ die Geschwindigkeit des SAR-Systems über Grund (Bodengeschwindigkeit).

Ausgehend von der geschätzten interferometrischen Phase, $\hat{\phi}$, die aus dem Paar der ersten und zweiten SLC-Erfassung, $s_1$, $s_2$, berechnet wird, durch

$$\hat{\phi} = \angle E\{s_1 s_2^*\},$$

werden die Null-Doppler-Phase ($\phi_{zd}$) und die Along-Track-Phase ($\phi_{at}$) voneinander getrennt, wobei E{-} eine mathematische Erwartung ist, * den komplexen Konjugationsoperator angibt und z(-) einen Winkeloperator bezeichnet.

Die modellbasierte und externe 3D-Deformation werden in einem East-North-Up (ENU)-Koordinatensystem, wie es vom SAR-System verwendet wird, von externen und modellbasierten Quellen bereitgestellt, die allgemeine Oberflächendeformationsbereiche sowohl in Landeis- (z. B. Gletscherflüsse) als auch in Festlandszenarien (z. B. Erdbeben) darstellen, wobei die synthetischen Oberflächendeformationen in die Null-Doppler-Phase $\phi_{zd}$ und die Along-Track-Phase $\phi_{at}$ induziert werden. Die 3D-Karten der Deformation im East-North-Up (ENU)-Koordinatensystem werden als $u_E$, $u_N$ und $u_U$ angezeigt. Die Szenarien für Landeis können durch die Eisgeschwindigkeitskarten dargestellt werden, die beispielsweise im Rahmen des Programms zur Überwachung des Grönländischen Eisschildes (PROMICE) [6] erstellt wurden. Im Rahmen des Projekts wurde insbesondere eine Zeitreihe von jährlichen WintereisGeschwindigkeitsmosaike auf der Grundlage der Sentinel-1 SAR-Offset-Verfolgung veröffentlicht.

Als Ergebnis wird ein Trainingsdatensatz aus mehreren Quellen bereitgestellt, bei dem die synthetischen Oberflächendeformationen in die Null-Doppler-Phase $\phi_{zd}$ und die Along-Track-Phase $\phi_{at}$ induziert werden, indem die oben angegebenen Gleichungen angewendet werden.

Für die Erzeugung der interferometrischen Phase aus dem synthetischen Paar muss keine Offset-Verfeinerung, wie z. B. Enhanced Spectral Diversity (ESD) und Incoherent Cross-Correlation (ICC), durchgeführt werden. Die Erzeugung der Interferogramme kann Burst für Burst durch Anwendung von Standard-Multilooking durch einen Maximum-Likelihood-Schätzer und Verwendung eines gleitenden Durchschnitts mit einem quadratischen Fenster $\Omega$ ausgeführt werden:

$$\Gamma = \sum_{\Omega} \{s_1 s_2^*\} = |\Gamma| e^{j\phi}$$

Dann können die interferometrische Phase $\hat{\phi}$ und Kohärenz $\hat{\rho}$ wie folgt abgerufen werden:

$$\hat{\phi} = \angle \Gamma$$

$$\hat{\rho} = \frac{|\Gamma|}{\sqrt{(\sum_{\Omega}\{|s_1|^2\} \sum_{\Omega}\{|s_2|^2\})}}$$

Als nächster Schritt wird eine Burst-Merging-Operation durchgeführt, die das Debursting oder Mosaikieren entlang des Azimuts umfasst und ein kontinuierliches Bild in Bezug auf die Azimutzeit erzeugt, indem redundante Linien zwischen den Bursts (Überlappungen) entfernt werden. Infolgedessen erscheinen die Amplituden und die interferometrische Kohärenz $\rho$ entlang des Azimuts kontinuierlich, während die interferometrische Phase die Phasensprünge an den Überlappungen zeigt, wenn in dem gegebenen Pixel eine Along-Track-Bewegung vorhanden ist.

Es ist zu beachten, dass die gewünschte Kohärenz $\rho$ das Rauschen in interferometrischen Produkten behandelt: Je niedriger ihr Wert ist, desto höher ist der Rauschbeitrag in den geschätzten Größen, die in den obigen Gleichungen abgerufen werden. Die Verwendung eines $\rho$-varianten-Datensatzes ist für die Entrauschungsfilterung im neuronalen Netz von Vorteil.

Nach der Erstellung des Datensatzes werden vorzugsweise Ausschnitte erstellt, um die Eingaben für das vorgeschlagene neuronale Netz zu definieren. Die Extraktion der Ausschnitte basiert im Allgemeinen auf den geometrischen Eigenschaften des TOPS-Systems, wie z. B. der Position der Verbindung zwischen zwei zusammengeführten TOPS-Bursts und der Größe jedes Bursts. Insbesondere ist die Größe der Ausschnitte so bemessen, dass eine Zentrierung im Phasensprung gewährleistet ist und gleichzeitig die endgültige Aggregation der vorhergesagten Patches sichergestellt ist. Gemäß einer bevorzugten Ausführungsform folgt auf den Schritt der Erzeugung des synthetischen Trainingsdatensatzes die Erzeugung von Patches mit einer Dimension, die durch eine Auswahl des (quadratischen) Fensters $\Omega$ definiert ist, wenn Multilooking auf das Interferogramm angewendet wird.

Das neuronale Netzwerk basiert auf einer überwachten Trainingsstrategie, um das oben genannte Phasentrennungsproblem zu erlernen. Die Besonderheit der Strategie liegt darin, dass das neuronale Netz mit einer Multitask-Lernstrategie trainiert wird, bei der gleichzeitig zwei zu trennende Phasen (in Along-Track- und in Across-Track-Richtung) und der Versatz in Along-Track-Richtung erlernt werden. Um dieses Ziel zu erreichen, ist das neuronale Netz ein Multitask-Lern-(MTL-)Faltendes Neuronales-Netz (Convolutional Neural Network, CNN). Vorzugsweise basiert das MTL-CNN auf dem bekannten U-Net-Modell, das sowohl im Encoder als auch im Decoder drei Schichten verwendet.

Gemäß einer bevorzugten Ausführungsform folgt auf den Encoder eine Brückenschicht und zwei Zweige, die jeweils einen dreischichtigen Dekodierungspfad mit Sprungverbindungen (skip connections) umfassen.

Ein erster Zweig sagt zunächst die Real- und Imaginärteile der Along-Track-Phase voraus und verwendet dann die vorhergesagte (rekonstruierte) Along-Track-Phase und die interferometrische Phase, die den Real- und Imaginärteilen einer ersten Sprungverbindung zugeordnet sind, zur Vorhersage der Null-Doppler-Phase und ihrer Real- und Imaginärteile.

Die normalisierte Doppler-Schwerpunktfrequenz wird als Eingabe für den zweiten Zweig verwendet, um eine RMSE-Regularisierung (Root Mean Squared Error) auf die im ersten Zweig geschätzte Along-Track-Phase und dieselbe Größe, die ausgehend von der Along-Track-Deformation im zweiten Zweig geschätzt wird, anzuwenden.

Die vorhergesagte (rekonstruierte) Along-Track-Phase wird mit der Along-Track-Phase verglichen, die sich aus dem Ausgang des zweiten Zweigs ergibt, um die Along-Track-Deformation zu bestimmen.

Gemäß einem zweiten Aspekt der vorliegenden Erfindung wird ein Verfahren zur rechnergestützten Verarbeitung digitaler SAR-Daten vorgeschlagen, die aus einer Vielzahl von Interferogrammen bestehen. Jedes Interferogramm wird aus einer ersten SLC-Erfassung eines SAR-Systems zu einem ersten Zeitpunkt und einer zweiten SLC-Erfassung des SAR-Systems zu einem zweiten Zeitpunkt, der später als der erste Zeitpunkt liegt, sowie einer Doppler-Schwerpunktfrequenz, einer interferometrischen Phase und einer Kohärenz erhalten, die alle aus einem jeweiligen Paar von ersten und zweiten SLC-Erfassungen erhalten werden. Eine Null-Doppler-Phase ist der Phasenbeitrag, der der Deformation zugeordnet ist, die eine Null-Doppler-LOS-Variation verursacht, eine Along-Track-Phase ist der Phasenbeitrag, der der Deformation in einer Along-Track-Richtung zugeordnet ist, und eine Schätzung einer zugeordneten Along-Track-Oberflächenbewegung wird mit einem datengestützten Modell erzeugt, das mit einem Verfahren gemäß einer oder mehreren Ausführungsformen gemäß der Erfindung erzeugt wird.

Gemäß einem dritten Aspekt der vorliegenden Erfindung wird eine Vorrichtung zur rechnergestützten Verarbeitung digitaler SAR-Daten vorgeschlagen. Die digitalen SAR-Daten bestehen aus einer Vielzahl von Interferogrammen, die jeweils aus einer ersten SLC-Erfassung des SAR-Systems zu einem ersten Zeitpunkt und einer zweiten SLC-Erfassung des SAR-Systems zu einem zweiten Zeitpunkt, der später als der erste Zeitpunkt liegt, erhalten werden, sowie aus einer Doppler-Schwerpunktfrequenz, einer interferometrischen Phase und einer Kohärenz, die alle aus einem jeweiligen Paar von ersten und zweiten SLC-Erfassungen erhalten werden. Die Vorrichtung umfasst ein datengestütztes Modell, das durch ein Verfahren gemäß einer oder mehreren Ausführungsformen gemäß der Erfindung erzeugt ist.

Gemäß einem vierten Aspekt der vorliegenden Erfindung wird ein Computerprogrammprodukt vorgeschlagen, das einen auf einem maschinenlesbaren Medium gespeicherten Programmcode zur Durchführung eines Verfahrens gemäß einer oder mehreren Ausführungsformen der Erfindung umfasst, wenn der Programmcode auf einem Computer ausgeführt wird.

Die Erfindung wird anhand der beigefügten Figuren in der Zeichnung näher erläutert.

Fig. 1 zeigt einen allgemeinen Überblick über das überwachte faltende neuronale Netz für das erfindungsgemäße interferometrische Phasenquellentrennungsproblem.

Fig. 2 zeigt ein schematisches Diagramm, das die Patch-Extraktion basierend auf den geometrischen Eigenschaften des zu simulierenden TOPS-Systems veranschaulicht.

Fig. 3 zeigt ein schematisches Diagramm, das die Entwicklung der Doppler-Schwerpunktfrequenz $f_{dc}$ entlang der Azimutzeit $t$ innerhalb eines einzelnen Bursts veranschaulicht.

Fig. 4 zeigt die Netzwerkarchitektur des erfindungsgemäßen faltenden neuronalen Netzwerks.

Fig. 5 zeigt eine Struktur von Residualblöcken, die in der vorgeschlagenen Architektur verwendet werden.

Fig. 6 zeigt einen beispielhaften Test an einem realen interferometrischen Paar über Grönland, bei dem sich verschiedene Zeilen auf einen anderen TOPS-Teilstreifen beziehen, während jede Spalte ein Merkmal angibt.

Fig. 7 zeigt ein Zeit-Frequenz-Diagramm eines TOPS-Systems, das zwei aufeinanderfolgende Bursts beschreibt, wobei eine zeitliche Überlappung einer spektralen Trennung entspricht.

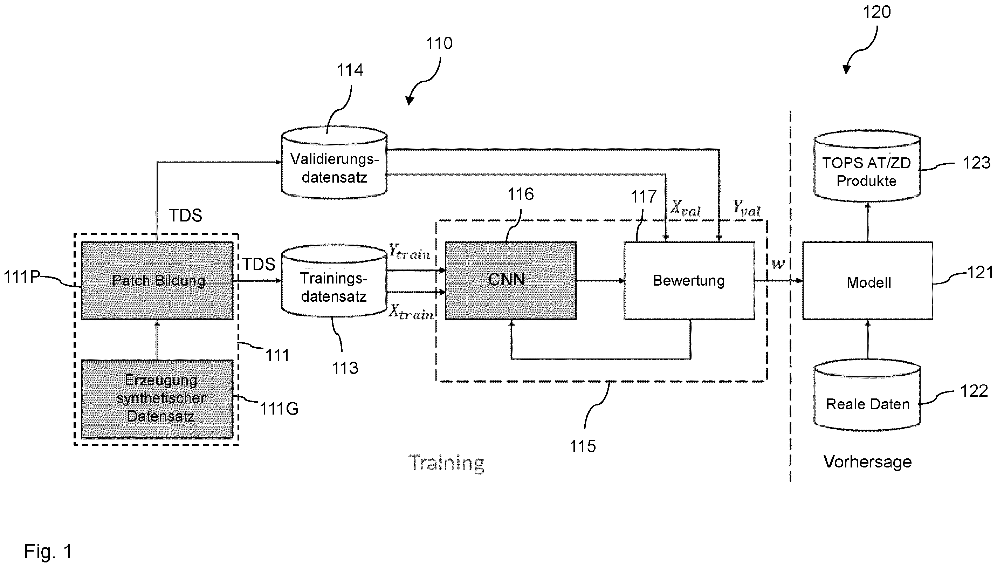

Fig. 1 zeigt einen allgemeinen Überblick über das Training eines datengestützten Modells zur Verarbeitung digitaler SAR-Daten eines Repeat-Pass-SAR-Systems unter Verwendung des bekannten TOPS-Erfassungsmodus für das erfindungsgemäße interferometrische Phasenquellentrennungsproblem. Das datengestützte Modell basiert auf einer CNN-Architektur (Convolutional Neural Network) und einer überwachten Multitask-Lernstrategie, die speziell für interferometrische TOPS-Daten entwickelt wurde.

Unter Bezugnahme auf Fig. 1 wird ein allgemeiner Überblick über das erfindungsgemäße Verfahren gegeben. Im linken Teil von Fig. 1 ist der Trainingsprozess ("Training" 110) des datengestützten Modells dargestellt, während im rechten Teil von Fig. 1 die Verarbeitung realer SAR-Daten des SAR-Systems ("Vorhersage" 120) unter Verwendung eines trainierten datengestützten Modells veranschaulicht wird, um die gewünschten Phaseninformationen zu ermitteln.

Um ein datengestütztes Modell für die Verarbeitung digitaler SAR-Daten eines Repeat-Pass-SAR-Systems zu trainieren, wird ein synthetischer Trainingsdatensatz TDS generiert (Block 111). Der synthetische Trainingsdatensatz TDS wird aus einer Vielzahl von Interferogrammen gebildet, die jeweils aus einem Paar einer ersten und einer zweiten Single-Look-Complex (SLC)-Erfassung gebildet werden, indem eine modellbasierte und externe 3D-Deformation zu einer gegebenen ersten SLC-Erfassung induziert wird, um die zugeordnete zweite SLC-Erfassung zu erhalten, die sich auf einen Zeitpunkt nach einem Deformationsereignis bezieht, und indem ein umgekehrter Ansatz angewendet wird, der durch eine gegebene Kohärenz und eine rauschfreie interferometrische Phase nach dem Deformationsereignis spezifiziert wird. Der Schritt der Erzeugung des synthetischen Trainingsdatensatzes TDS umfasst einen ersten Schritt der Erzeugung der Vielzahl von Interferogrammen, die Patches erzeugen (Block 111G), und einen zweiten Schritt der

EP 4 517 382 A1

Erzeugung (d. h. Extraktion) von Patches (Block 111P) aus den Interferogrammen von Schritt 111G. Wie später erläutert wird, basiert die Patch-Extraktion im Allgemeinen auf den geometrischen Eigenschaften des TOPS-Systems, wie z. B. der Position der Verbindung zwischen zwei zusammengeführten TOPS-Bursts und der Größe jedes Bursts. Insbesondere ist die Patch-Größe so zugeschnitten, dass eine Zentrierung im Phasensprung gewährleistet ist und gleichzeitig die endgültige Aggregation der vorhergesagten Patches sichergestellt ist.

Nach der Generierung einer Vielzahl von Patches wird der Trainingsdatensatz TDS generiert. Der Trainingsdatensatz TDS wird in einen ersten Teil 113 ("Trainingsdatensatz"), d. h. Daten, die für das Training eines datengestützten Modells 115 verwendet werden, und einen zweiten Teil 114 ("Validierungsdatensatz"), der für die Validierung der Qualität des trainierten datengestützten Modells 115 verwendet wird, aufgeteilt. Wie dem Fachmann bekannt ist, umfasst das datengestützte Modell 115 ein zu trainierendes Modell 116 ("CNN") und einen Bewertungsteil 117 ("Bewertung") zur Bewertung der Qualität des Modells 116. Das Modell 116 verwendet eine CNN-Architektur und eine überwachte Multitask-Lernstrategie, die speziell für interferometrische TOPS-Daten entwickelt wurde, wie später erläutert wird.

Das Modell 116 (im Folgenden auch als CNN bezeichnet), das mit dem Trainingsdatensatz 113 trainiert und mit dem Validierungsdatensatz 114 validiert wurde, stellt das datengestützte Modell 121 ("Modell") für die rechnergestützte Verarbeitung digitaler SAR-Daten ("Reale Daten") im "Vorhersage"-Teil 120 von Fig. 1 dar. Die digitalen SAR-Daten ("Reale Daten") werden in einer Datenbank 122 bereitgestellt, um spezifische Informationen ("TOPS AT/ZD-Produkte") 123 vorherzusagen, die für eine Phasenquellentrennung geeignet sind. Diese spezifischen Informationen können in einer Datenbank 123 für eine weitere Auswertung gespeichert werden.

Die in das datengestützte Modell 115 übertragenen Eingabedaten aus dem Trainingsdatensatz 113 und dem Validierungsdatensatz 114 umfassen die Eingabedaten $X_{train}$, wie sie aus der Datenbank 122 abrufbar wären, und die Ausgabedaten $Y_{train}$, die den spezifischen Informationen entsprechen, die vom CNN 121 als zu berechnender Ausgang bereitgestellt werden.

Im Folgenden wird die Erzeugung synthetischer Datensätze 111 (111G und 111P) detailliert beschrieben.

Für die Erzeugung synthetischer Datensätze 111G werden synthetische interferometrische Erfassungspaare durch Anwendung eines umgekehrten Ansatzes erzeugt. Bei gegebener gewünschter Kohärenz und rauschfreier interferometrischer Phase nach einem Ereignis induziert das Signalmodell den Versatz in der zweiten Erfassung (d. h. nach dem Ereignis). Der Begriff "Ereignis" ist als Deformation zu verstehen. Die Deformation kann beispielsweise ein Erdbeben oder ein Gletscherfluss sein. Das vorgeschlagene Verfahren garantiert Daten, die für die spezifische Bewegung bestimmt sind.

Versatzkarten, die die notwendigen Informationen zum Induzieren von Versätzen liefern, können aus verschiedenen Quellen ausgewählt werden. Beispielsweise können Karten externer Oberflächendeformationen, wie z. B. Karten der Eisgeschwindigkeit, die im Rahmen des Programms zur Überwachung des Grönländischen Eisschildes (PROMICE) [6] erstellt wurden, und ausgefeiltere mathematische Modelle, wie das von Okada zur Beschreibung seismischer Ereignisse vorgeschlagene [7], verwendet werden. Als Ergebnis wird ein Satz synthetischer TOPS-Interferogramme für den Patch-Bildungsschritt 111P bereitgestellt, der für die Aufteilung der generierten Daten in den Trainingsdatensatz 113 und den Validierungsdatensatz 114 verantwortlich ist.

Das Problem der Generierung des Trainingssatzes wird durch die Simulation typischer Verhaltensweisen gelöst, die in realen InSAR-Daten auftreten. Insbesondere wird das folgende Signalmodell genutzt:

$$\begin{cases} s_1 = A_0 w_1 \\ s_2 = s_1 \rho^* e^{j\phi_{theo}} + A_0 w_2 \sqrt{1-\rho^2} \end{cases} \qquad (1)$$

wobei $s_1$ und $s_2$ die beiden SLC-Erfassungen des interferometrischen Paares sind (bereits in der geometrischen Bedeutung coregistriert), $A_0$ die rauschfreie Amplitude ist, $\rho$ die gewünschte Kohärenz ist. $w_1$ und $w_2$ sind unabhängige zirkuläre komplexe Standard-Gauß-Variablen und die Phase $\phi_{theo}$ ist die rauschfreie Wrapped-Summe der beiden Deformationen, der Null-Doppler-Phase $\phi_{zd}$ und der Along-Track-Phase $\phi_{at}$:

$$\phi_{theo} = mod_{2\pi}(\phi_{zd} + \phi_{at}) \qquad (2)$$

Die Null-Doppler-Phase $\phi_{zd}$ ist der Phasenbeitrag, der der Deformation zugeordnet ist, die eine Null-Doppler-LOS-Variation verursacht, d. h. die Projektion der Deformationen entlang der vertikalen Richtung und ihrer orthogonalen Ebene über die senkrechte LOS zwischen Ziel und Sensor. Sie ist definiert als:

$$\phi_{zd} = \frac{4\pi}{\lambda} \left[ \sin(\theta_{inc}) \sin(\theta_N) u_E + \sin(\theta_{inc}) \cos(\theta_N) u_N - \cos(\theta_{inc}) u_U \right] \qquad (3)$$

Dabei ist $\lambda$ die Trägerwellenlänge, $\theta_{inc}$ der Einfallswinkel, $\theta_N$ der Nordwinkel, der einer 90°-Drehung des TOPS-Steuerkurswinkels entspricht, während $u_E$, $u_N$ und $u_U$ jeweils die Ost-, Nord- und Aufwärtskomponenten der Deformation sind (ENU-Koordinatensystem, das vom SAR-System verwendet wird). Die Along-Track-Phase $\phi_{at}$ ist der der Deformation in Along-Track-Richtung zugeordnete Phasenbeitrag:

$$\phi_{at} = \frac{2\pi f_{dc}}{v_g}[-\cos(\theta_N)\,u_E + \sin(\theta_N)\,u_N] \qquad (4)$$

wobei $f_{dc}$ die Doppler-Schwerpunktfrequenz und $v_g$ die Bodengeschwindigkeit sind.

Ziel ist es, die beiden Größen in den Gleichungen (3) und (4) ausgehend von der geschätzten interferometrischen Phase $\hat{\phi}$ zu trennen, die aus dem in den Gleichungen (1) und (2) definierten SLC-Paar berechnet wird:

$$\hat{\phi} = \angle E\{s_1 s_2^*\} \qquad (5)$$

wobei E{-} der mathematische Erwartungswert ist, * den komplexen Konjugationsoperator angibt und z(-) den Winkeloperator bezeichnet.

Die 3D-Karten der Deformation im East-North-Up (ENU)-Koordinatensystem, angegeben als $u_E$, $u_N$ und $u_U$, werden von den oben genannten externen und modellbasierten Quellen generiert, die allgemeine Bereiche der Oberflächendeformation sowohl in Szenarien mit Landeis (z. B. Gletscherflüsse) als auch in Szenarien mit fester Erde (z. B. Erdbeben) darstellen.

Die Szenarien für das Landeis werden anhand der Eisgeschwindigkeitskarten repräsentiert, die im Rahmen des Programms zur Überwachung des Grönländischen Eisschildes (PROMICE) erstellt wurden [6]. Im Rahmen des Projekts wurde insbesondere eine Zeitreihe von jährlichen Wintereisgeschwindigkeitsmosaike auf der Grundlage der Sentinel-1 (S-1) SAR-Offset-Tracking veröffentlicht. Jedes georäumliche Produkt erstreckt sich von 2016 an über den Zeitraum vom 1. November bis zum 28. Februar des Folgejahres mit einem nominalen Rasterabstand von 500 m. Das Mosaik enthält einen zeitlichen Durchschnitt der Kreuzkorrelation zwischen den einzelnen Reflektivitätskarten und berücksichtigt alle 6- und 12-Tage-Paare, die in diesem Zeitraum erfasst wurden.

Die Unterschiede in Bezug auf die vorgeschlagene Methodik liegen in der (1) geringen Auflösung und (2) den Schätzfehlern aufgrund der Kreuzkorrelation zwischen der Amplitude der SLCs (es wird keine Interferometrie angewendet) und dem (3) zeitlichen Durchschnitt, der die gesamte Wintersaison abdeckt und keinen direkten Vergleich mit den realen Daten ermöglicht. Um die Fehler in den Produkten zu beheben, kann ein Gaußscher Filter auf die geokodierten Eisgeschwindigkeitskarten angewendet werden, wobei eine Fenstergröße von 11 × 11 Pixeln verwendet wird. Anschließend können die Daten wieder in das Slant-Range-Raster des SLC geokodiert werden. Die resultierenden Eisgeschwindigkeitskomponenten in Meter pro Tag werden auf einen Versatz skaliert, die das Repeat-Pass-SAR-System, hier: S-1, beobachten kann, indem die folgende Formel angewendet wird:

$$u_{ENU} = v_{ENU}\,\Delta T \qquad (6)$$

wobei $\Delta T$ die Wiederholungszeit in Tagen ist.

Die Szenarien für feste Erdschichten werden mit einem ausgefeilteren mathematischen Modell behandelt, das von Okada zur Beschreibung seismischer Ereignisse vorgeschlagen wurde (siehe Referenz [7]). Sobald die geometrischen Parameter der Verwerfung festgelegt sind, wird die Oberflächendeformation in kartesischen Koordinaten (XYZ) berechnet, die aus einer Green'schen Funktionslösung für das Problem des elastischen Halbraums abgeleitet werden. Da die lokale SAR-Geometrie aus den Informationen der Zustandsvektoren bekannt ist, kann die vom Modell bereitgestellte Deformation mithilfe einer geeigneten Rotationsmatrix lokal in die Radar-Geometrie (ENU) gedreht werden (siehe Referenz [8]).

Als Ergebnis wird ein Trainingsdatensatz aus mehreren Quellen bereitgestellt, bei dem die synthetischen Oberflächendeformationen in die Null-Doppler-Phase $\phi_{zd}$ und die Along-Track-Phase $\phi_{at}$ induziert werden, indem Gleichung (3) bzw. Gleichung (4) angewendet wird.

Für die Erzeugung der interferometrischen Phase $\hat{\phi}$ aus dem synthetischen Paar wird keine Offset-Verfeinerung wie Enhanced Spectral Diversity (ESD) und Incoherent Cross-Correlation (ICC) durchgeführt, und die Interferogrammerzeugung kann direkt Burst für Burst durch Anwendung von Standard-Multilooking durch einen Maximum-Likelihood-Schätzer, wie in Referenz [9] vorgeschlagen, und unter Verwendung eines gleitenden Durchschnitts mit quadratischem Fenster $\Omega$ ausgeführt werden:

$$\Gamma = \sum_{\Omega}\{s_1 s_2^*\} = |\Gamma|e^{j\phi} \qquad (7)$$

Die interferometrische Phase $\hat{\phi}$ und Kohärenz $\hat{\rho}$ werden wie folgt aus $\Gamma$ gewonnen:

$$\widehat{\phi} = \angle\Gamma \; (8)$$

und:

$$\hat{\rho} = \frac{|\Gamma|}{\sqrt{(\sum_\Omega\{|s_1|^2\}\sum_\Omega\{|s_2|^2\})}} \qquad (9)$$

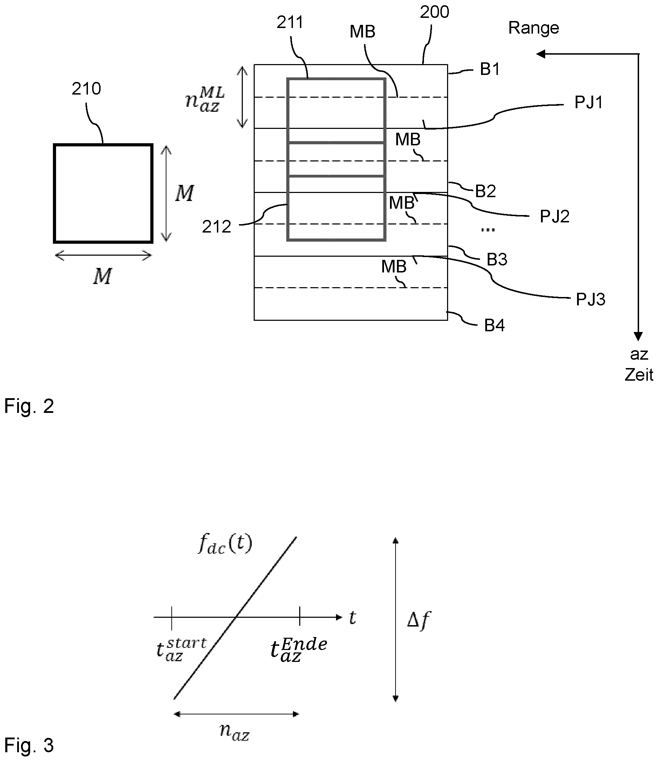

Schließlich wird eine Burst-Merging-Operation (Debursting oder Mosaikieren entlang des Azimuts) angewendet, die ein kontinuierliches Bild in Bezug auf die Azimutzeit erzeugt, wie in Fig. 2 dargestellt, indem redundante Linien zwischen den Bursts B1, B2, B3, B4 (Überlappungen) entfernt werden. Infolgedessen erscheinen die Amplituden und die interferometrische Kohärenz $\rho$ entlang des Azimuts (az-Zeit) kontinuierlich, während die interferometrische Phase die Phasensprünge PJ1, PJ2, PJ3 an den Überlappungen aufweist, wenn in dem jeweiligen Pixel eine Bewegung entlang der Spur vorhanden ist.

Es ist wichtig zu beachten, dass die in Gleichung (1) dargestellte gewünschte Kohärenz $\rho$ das Rauschen in interferometrischen Produkten behandelt: Je niedriger ihr Wert ist, desto höher ist der Rauschbeitrag in den geschätzten Größen, die in Gleichung (8) und Gleichung (9) gewonnen werden. Die Verwendung eines p-Varianten-Datensatzes ist für die Entrauschungsfilterung im neuronalen Netzwerk von Vorteil.

Als Nächstes wird die Generierung der Patches gemäß Block 111P von Fig. 1 beschrieben. Im Allgemeinen ist die Patch-Bildung für das TOPS-Phasenquellentrennungsproblem systembasiert, d. h. ihre Dimension und Auswahl hängen von den geometrischen Eigenschaften der TOPS-Daten ab. Insbesondere führt die Auswahl der Patches zur Auswahl eines bestimmten Fensters $\Omega$ wenn Multilooking auf das Interferogramm angewendet wird.

Zum Beispiel wird im Fall von S-1, da die Fenstergröße entsprechend der Azimut- und Bodenbereichsauflösung von S-1 Interferometrie Wide (IW)-Modusdaten, 14 m bzw. 3,7 m, gewählt wird [10], die Abtastung am Ausgang auf 100 m festgelegt, was einer $7 \times 27$-Mittelungsfenstergröße entspricht. Fig. 2 zeigt den Hauptvorteil der Verwendung dieser Annahme.

Fig. 2 zeigt ein Interferogramm $\Gamma$ für einen Teilstreifen 200 des SAR-Systems, in dem redundante Linien zwischen den Bursts B1, B2, B3, B4 (Überlappungen) bereits entfernt wurden. Die mit MB gekennzeichneten gestrichelten Linien beziehen sich auf die Midbursts der Bursts B1, B2, B3, B4. Aus der Sicht des Teilstreifens (subswath) ergibt sich durch die Aufteilung in Patches 210 (in der Regel auf der linken Seite von Fig. 2 dargestellt) eine Mitten-Überlappung. Im vorliegenden Beispiel sind zwei aus dem Interferogramm ausgewählte Patches 211, 212 dargestellt. Der Fachmann wird verstehen, dass die Patches 211, 212 (im Allgemeinen: 210) so ausgewählt werden, dass sie das gesamte Interferogramm abdecken. Die Patches 210 werden verwendet, um zu bestimmen, wo sich Phasensprünge im Interferogramm befinden. Die Patches 210 werden so angeordnet, dass sich ein entsprechender Phasensprung PJ1, PJ2, PJ3 in der Mitte eines entsprechenden Patches 210 befindet. In der vorliegenden Ausführungsform befindet sich der Phasensprung PJ1 in der Mitte des Patches 211, und der Phasensprung PJ2 befindet sich in der Mitte des Patches 210.

Da die Burst-Dauer in einem S-1 IW-Produkt etwa 3 s beträgt und der Azimut-Zeitabstand etwa $\Delta t = 2$ ms (Referenz [10]) entspricht, beträgt die nominale Burst-Größe entlang des Azimuts bei voller Auflösung immer etwa 1500 Zeilen. Nach dem Entfernen des Bursts und dem Multilooking beträgt die effektive Burstgröße entlang des Azimuts, $n_{az}^{ML}$, etwa 214 Pixel, was für eine Patchgröße von $M = 256$ geeignet ist und eine Überlappung zwischen den Patches gewährleistet.

Das vorgeschlagene CNN wird den Real- und Imaginärteil der interferometrischen Phase $\phi$ berücksichtigen, die als $\xi^{Re} = Re\{e^{j\phi}\}$ bzw. $\xi^{Im} = Im\{e^{j\phi}\}$ angegeben wird. Darüber hinaus wird eine Karte betrachtet, die die Empfindlichkeit des ersten TOPS-Bildes entlang der Azimutrichtung beschreibt. Dieses Bild wird insbesondere durch Hinzufügen einer linearen Azimutabhängigkeit zu jedem Doppler-Schwerpunkt-Entfernungsvariantenvektor unter Verwendung der in [11] berechneten und in Fig. 3 dargestellten spektralen Trennung $\Delta f$ gewonnen.

Da die Konvergenz eines CNN in der Regel schneller ist, wenn der Durchschnitt jeder Eingabevariablen über den Trainingssatz nahe Null liegt [12], wird die gewonnene Doppler-Schwerpunktmatrix für 2,8 kHz normalisiert, ein Wert, der in S-1-TOPS-Daten nicht überschritten wird, wodurch ein Eingabemerkmal zwischen -1 und 1 garantiert wird. Im vorliegenden Dokument wird diese Größe als $f_{dc}^{norm}$ bezeichnet.

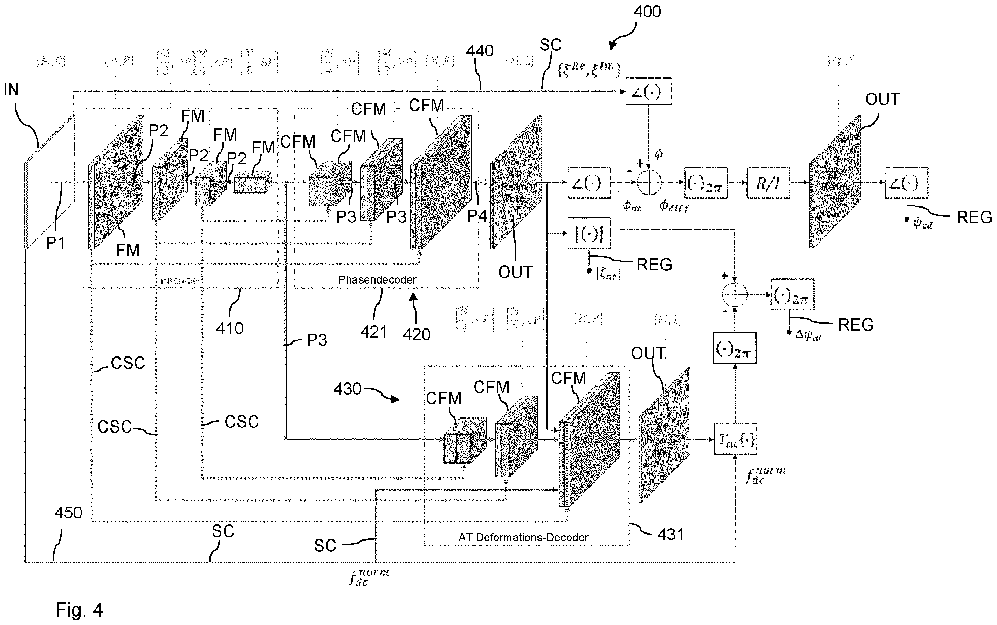

Im Folgenden werden das vorgeschlagene CNN 115 und sein Training für die Phasentrennung detailliert anhand von Fig. 4 beschrieben. Das CNN 400 in Fig. 4, das dem CNN 115 in Fig. 1 entspricht, basiert auf einer überwachten Trainingsstrategie, um das oben erläuterte Phasentrennungsproblem zu erlernen. Die Besonderheit der vorgeschlagenen Strategie besteht darin, wie das Netzwerk mithilfe einer MTL-Strategie (multi-task learning) trainiert wird, d. h., es werden gleichzeitig zwei zu trennende Phasen (in Along-Track- und in Across-Track-Richtung) und der Versatz in Along-Track-Richtung geschätzt.

Das Hauptziel des vorgeschlagenen MTL-CNN 400 besteht darin, die Trennung der Along-Track-Phase $\phi_{at}$ von der Null-Doppler-Phase $\phi_{zd}$ zu optimieren und die zugeordnete Along-Track-Oberflächenbewegung $u_{at}$ zu schätzen. Das MTL-CNN 400 basiert auf dem bekannten U-Net-Modell, das sowohl im Encoder als auch im Decoder drei Schichten verwendet. In der schematischen Darstellung von Fig. 4 umfasst das CNN einen Encoder 410 und zwei Zweige 420 und 430, die jeweils einen dreischichtigen Dekodierungspfad mit Sprungverbindungen 440 bzw. 450 umfassen. Der erste Zweig 420 umfasst einen Phasen-Encoder 421. Der zweite Zweig 430 umfasst einen AT-Deformations-Decoder 431.

Die in Fig. 4 verwendeten grafischen Elemente haben die folgende Bedeutung.

| | |
|---|---|
| IN: | Eingang |
| OUT: | Ausgang |
| FM: | Feature Maps |
| CFM: | Verkettete Feature Maps |
| REG: | Regularisierung |
| Pfeil P1: | Residualblock (RB) |
| Pfeil P2: | Maxpooling + RB |
| Pfeil P3: | RB + Upsampling |
| Pfeil P4: | 1×1-Faltung |
| CSC: | Copy-Skip-Verbindung |
| SC: | Standardverbindung |
| $\lvert(\cdot)\rvert$: | Modulus |
| $\angle(\cdot)$: | Winkel |
| $(\cdot)_{2\pi}$: | Abwicklung (wrapping) |
| $R/I$: | Trennung Real/Imaginärteil |
| $T_{at}\{\cdot\}$: | Along-Track (AT)-Deformation nach Phase |
| AT: | Along-Track |
| ZD: | Null-Doppler |

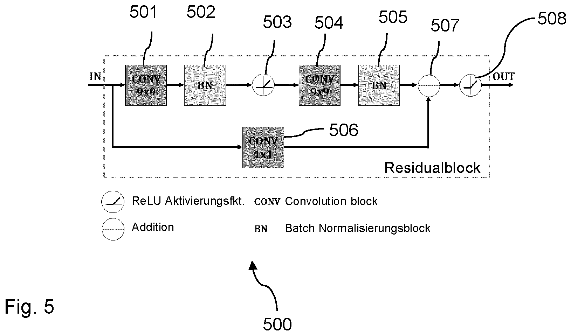

Sowohl der Encoder 410 als auch die Decoder 421, 431 weisen drei Schichten auf, die jeweils mit einer Residualblock-Architektur (RB) verbunden sind, wie in Fig. 5 dargestellt.

Auf jeder Ebene wird anstelle einer klassischen Kaskade von Faltungen die in Fig. 5 dargestellte Residualblock-Architektur 500 verwendet. Hier wird der Eingang IN mit dem Ausgang OUT über eine Kurzschlussverbindung (1 × 1-Faltung) verbunden, um die Dimensionen des Ausgangs an die des Eingangs anzupassen. Genauer gesagt umfasst die Residualblock-Architektur (RB) einen ersten 9x9-Faltungsblock 501, gefolgt von einem ersten Stapel-Normalisierungsblock 502, einer ersten ReLU-Aktivierungsfunktion 503, einem zweiten 9x9-Faltungsblock (convolution block) 504 und einem zweiten Stapel-Normalisierungsblock (batch normalization block) 505. Ein dritter 1×1-Faltungsblock 506 verzweigt sich vom Eingang IN und sein Ausgang wird mit dem Ausgang des zweiten Batch-Normalisierungsblocks 505 in einem Additionsblock 507 addiert. Der Ausgang des Additionsblocks 507 wird an eine zweite ReLU-Aktivierungsfunktion 508 weitergeleitet, die den Ausgang für die nächste Schicht bereitstellt.

Der Ersatz von Standard-Faltungsschichten durch Residualschichten ist eine vorgeschlagene Lösung, um die Rechenzeit zu verkürzen und die Überanpassung während des Trainings zu begrenzen [13]. Die Form der Eingabe ist [M × M × C], wobei M die Größe der Patches und C die Anzahl der Kanäle ist, d. h. die als Eingabe für das vorgeschlagene neuronale Netz ausgewählten Merkmale. Die Patchgröße M wird auf 256 und die Anzahl der Eingabemerkmale C auf 4 festgelegt und besteht aus dem Real- und dem Imaginärteil des der interferometrischen Phase zugeordneten komplexen Koeffizienten $\xi^{Re}$ bzw. $\xi^{Im}$ (Phasor), zusätzlich zur Kohärenz $\rho$ und der Empfindlichkeit entlang des Azimuts, die in der normalisierten Doppler-Schwerpunktfrequenzkarte $f_{dc}^{norm}$ verborgen sind. Die Anzahl der Filtergrößen am Ausgang wird für alle Schichten auf ein Vielfaches von P = 32 Filtern festgelegt.

Daher wurde bei der MTL-CNN-Architektur des CNN eine Schicht aus dem ursprünglichen U-Net entfernt und eine dreischichtige Implementierung verwendet. Der Grund für diese Wahl liegt in der Tatsache, dass kleine Eingabepatches (256 × 256 Pixel) verarbeitet werden und dass eine flachere Architektur einfacher zu trainieren ist. Tatsächlich hat sie eine geringere Anzahl von zu optimierenden Hyperparametern und erfordert daher eine geringere Anzahl von Eingabe-Samples (Trainings-Patches).

Wie bereits erwähnt, folgt auf den Encoder 410 eine Brückenschicht und zwei Zweige 420, 430, die jeweils einen dreischichtigen Dekodierungspfad mit Sprungverbindungen 440, 450 umfassen: Der obere Zweig 440 prognostiziert zunächst die Real- und Imaginärteile der Along-Track-Phase $\{\xi_{az}^{Re}, \xi_{az}^{Im}\}$ und verwendet dann die rekonstruierte Along-Track-Phase zusammen mit der interferometrischen Phase, die den Real- und Imaginärteilen $\{\xi^{Re}, \xi^{Im}\}$ zugeordnet ist (Eingaben des Netzwerks) zur Vorhersage der Null-Doppler-Phase und insbesondere der Real- und Imaginärteile $\{\xi_{zd}^{Re}, \xi_{zd}^{Im}\}$ verwendet. Dieselbe rekonstruierte Along-Track-Phase wird mit derselben Phase verglichen, die am Ausgang des unteren Zweigs 450 gemessen wird, d. h. der Along-Track-Deformation $u_{at}$.

Insbesondere ist es angesichts der normalisierten Doppler-Schwerpunktfrequenz $f_{dc}^{norm}$, die als Eingabe für das Netzwerk verwendet wird, möglich, die RMSE-Regularisierung auf die Along-Track-Phase anzuwenden, die im oberen Zweig 440 geschätzt wird, und auf dieselbe Größe, die ausgehend von der Along-Track-Deformation im unteren Zweig 450 geschätzt wird. Auf diese Weise kann das Netzwerk die Gewichte auf beiden Zweigen 440, 450 festlegen, um auch die Beziehung zwischen den Ausgängen zu erfüllen. Darüber hinaus garantiert das vorgeschlagene neuronale Netzwerk eine Regularisierung des Einheitsmoduls im Along-Track-Phasor und eine Regularisierung der Kontinuität der Null-Doppler-Phase.

Das oben beschriebene Verfahren wurde von den Erfindern durch die Durchführung einer Reihe von Simulationen erfolgreich nachgewiesen.

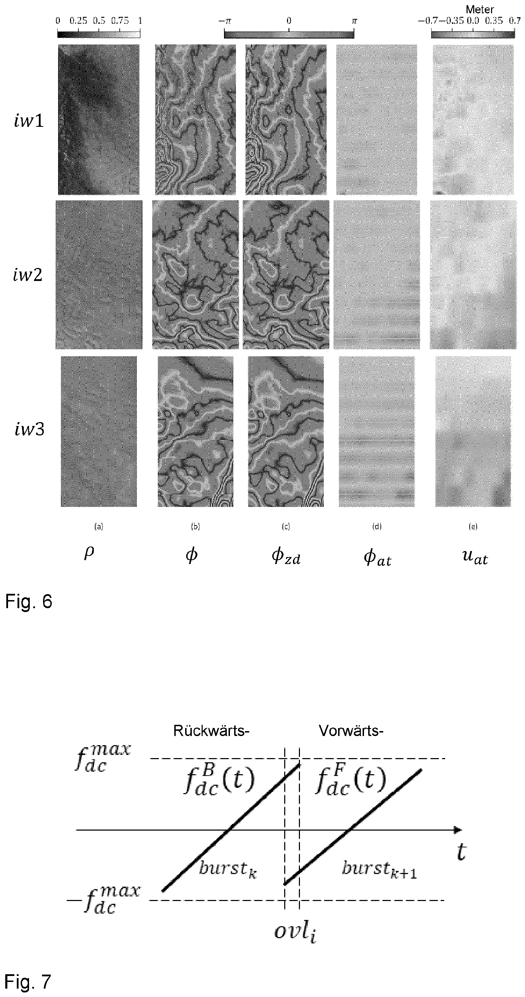

In Fig. 6 sind die Ergebnisse über drei Teilstreifen iw1, iw2, iw3 eines realen Interferogramms dargestellt. Jede Zeile in Fig. 6 ist einem anderen Teilstreifen zugeordnet. Die Spalten (a) und (b) stellen jeweils die Kohärenz $\rho$ und die interferometrische Phase $\phi$ des S-1-Paares dar; diese Größen werden indirekt als Eingabe für das CNN 121 bzw. 500 verwendet. Die Spalten (c) und (d) sind jeweils die rekonstruierte Null-Doppler-Phase $\phi_{zd}$ und die Along-Track-Phase $\phi_{at}$, während Spalte (e) die Along-Track-Deformation $u_{at}$ in Metern ist, die der letztgenannten Größe zugeordnet ist.

Betrachtet man zunächst die erste Zeile (iw1) von Fig. 6, so kann man feststellen, dass das trainierte Netzwerk in der Lage ist, die interferometrische Phase zu entrauschen, wenn die Kohärenz niedrig ist. Dies wird durch die zufällige Kohärenzvariation motiviert, die auf die trainierten Patches angewendet wird. Eine zusätzliche Überprüfung zur Bewertung der Gültigkeit der Deformation entlang der Spur kann durch den Vergleich der umhüllenden Phase, die aus der geschätzten Deformation rekonstruiert wurde, und der Phase, die dem differentiellen Interferogramm innerhalb des überlappenden Bereichs zugeordnet ist, erfolgen. Ersteres kann aus Gleichung (4) abgeleitet werden als:

$$\phi_{at}^{ovl_i} = mod_{2\pi}\left(\phi_{az}^{F,ovl_i} - \phi_{az}^{B,ovl_i}\right) = mod_{2\pi}\left(\frac{2\pi\Delta f_{dc}^{ovl_i}}{v_g}u_{at}\right) \qquad (10)$$

wobei $\phi_{az}^{F,ovl_i}$ und $\phi_{az}^{B,ovl_i}$ jeweils die Along-Track-Phasen sind, die dem Überlappungsbereich zweier aufeinanderfolgender Bursts (vorwärts und rückwärts) zugeordnet sind. Gleichung (9) kann durch Betrachtung des Schemas in Fig. 7 begründet werden, das das Zeit-Frequenz-Diagramm zweier aufeinanderfolgender Bursts desselben Teilstreifens in einem bestimmten Bereich darstellt.

Insbesondere zeigt Fig. 7, dass $\Delta f_{dc}^{ovl_i}$ die Differenz der Vorwärts- und Rückwärts-Doppler-Schwerpunktfrequenzen bei der Überlappung $ovl_i$ ist und sich in Bezug auf die zuvor auf 2,8 kHz festgelegte maximale Doppler-Schwerpunktfrequenz $f_{dc}^{max}$ max auf einen leicht variierenden Term $\alpha$ zwischen -1 und -2 annähern lässt.

Der vorgeschlagene Ansatz ermöglicht die Nutzung bestehender Systeme im TOPS-Modus zur Abschätzung der Deformation entlang der Flugbahn, die normalerweise die Richtung ist, in der SAR-Systeme im LEO-Orbit weniger empfindlich sind. Darüber hinaus ebnet diese Technik den Weg für zukünftige Systeme, wie die bevorstehende Harmony-Mission der ESA, um Deformationskarten entlang der Flugbahn besser abschätzen zu können. Die Technik kann zur Überwachung von Gletschern in der Arktis, z. B. über Grönland, unter Verwendung von Sentinel-1-Daten, zur Messung großer Deformationen über Eislandflächen, z. B. Gletscherflüsse, zur Messung großer Deformationen über fester Erde, z. B. Erdbeben, und zur Minderung der in TOPS-Interferogrammen vorhandenen Phasensprünge bei Vorhandensein von Bewegung entlang der Spur in der Szene als Verallgemeinerung der ESD-Technik genutzt werden.

References

[1] R. Scheiber, M. Jäger, P. Prats-Iraola, F. De Zan, and D. Geudtner, "Speckle Tracking and Interferometrie Processing of TerraSAR-X TOPS Data for Mapping Nonstationary Scenarios," IEEE Journal of Selected Topics in Applied Earth Observations and Remote Sensing, vol. 8, no. 4, pp. 1709-1720, 2015.

[2] P. Prats-Iraola, M. Nannini, N. Yague-Martinez, M. Pinheiro, J.-S. Kim, F. Vecchioli, F. Minati, M. Costantini, S. Borgstrom, P. De Martino, V. Siniscalchi, M. Foumelis, and Y.-L. Desnos, "Interferometric investigations with the Sentinel-1 constellation," in 2017 IEEE International Geoscience and Remote Sensing Symposium (IGARSS), 2017, pp. 5537-5540.

[3] R. Grandin, E. Klein, M. Metois, and C. Vigny, "Three-dimensional displacement field of the 2015 Mw8.3 Illapel earthquake (Chile) from across- and along-track Sentinel-1 TOPS interferometry," Geophysical Research Letters, vol. 43, no. 6, pp. 2552-2561, 2016.

[4] J. K. Andersen, A. Kusk, J. P. Merryman Boncori, C. S. Hvidberg, and A. Grinsted, "Improved Ice Velocity Measurements with Sentinel-1 TOPS Interferometry," Remote Sensing, vol. 12, no. 12, 2020.

[5] A. Kusk, J. K. Andersen, and J. P. Merryman Boncori, "Sentinel-1 TOPS Interferometry for Ice Flow Mapping," in EUSAR 2021; 13th European Conference on Synthetic Aperture Radar, 2021, pp. 1-5.

[6] A. Solgaard, A. Kusk, J. P. Merryman Boncori, J. Dall, K. D. Mankoff, A. P. Ahlstrøm, S. B. Andersen, M. Citterio, N. B. Karlsson, K. K. Kjeldsen, N. J. Korsgaard, S. H. Larsen, and R. S. Fausto, "Greenland ice velocity maps from the PROMICE project," Earth System Science Data, vol. 13, no. 7, pp. 3491-3512, 2021.

[7] Y. Okada, "Surface deformation due to shear and tensile faults in a halfspace," Bulletin of the Seismological Society of America, vol. 75, no. 4, pp. 1135-1154, Aug. 1985.

[8] M. Grewal, L. Weill, and A. Andrews, Global Positioning Systems, Inertial Navigation, and Integration: Second Edition. John Wiley Sons, Ltd, Feb. 2007, ch. Appendix C: Coordinate Transformations, pp. 456-501.

[9] J.-S. Lee, K. Papathanassiou, T. Ainsworth, M. Grünes, and A. Reigber, "A new technique for noise filtering of SAR interferometric phase images," IEEE Transactions on Geoscience and Remote Sensing, vol. 36, no. 5, pp. 1456-1465, 1998.

[10] M. Bourbigot, H. Johnsen, and R. Piantanida, "Sentinel Product Definition," European Space Agency (ESA), Tech. Rep. S1-RSMDA-52-7440, March 2016. [Online]. Available: https://sentinel.esa.int/documents/247904/ 1877131/Sentinel-1 -Product-Definition

[11] N. Yagüe-Martinez, P. Prats-Iraola, F. Rodriguez Gonzalez, R. Brcic, R. Shau, D. Geudtner, M. Eineder, and R. Bamler, "Interferometrie Processing of Sentinel-1 TOPS Data," IEEE Transactions on Geoscience and Remote Sensing, vol. 54, no. 4, pp. 2220-2234, 2016.

[12] Y. A. LeCun, L. Bottou, G. B. Orr, and K.-R. Müller, Neural Networks: Tricks of the Trade: Second Edition. Springer Berlin Heidelberg, 2012, ch. Efficient BackProp, pp. 9-48.

[13] K. He, X. Zhang, S. Ren, and J. Sun, "Deep residual learning for image recognition," in 2016 IEEE Conference on Computer Vision and Pattern Recognition (CVPR), 2016, pp. 770-778.

**Patentansprüche**

1. Verfahren zur rechnergestützten Erzeugung eines datengestützten Modells für die rechnergestützte Verarbeitung digitaler SAR-Daten eines Repeat-Pass-SAR-Systems, das zur Bestimmung von Oberflächendeformationen eingerichtet ist, wobei die digitalen SAR-Daten aus einer Vielzahl von Interferogrammen ($\Gamma$) bestehen, die jeweils aus einer ersten SLC-Erfassung ($s_1$) des SAR-Systems zu einem ersten Zeitpunkt und einer zweiten SLC-Erfassung ($s_2$) des SAR-Systems zu einem zweiten Zeitpunkt, der später als der erste Zeitpunkt ist, erhalten werden und einer Doppler-Schwerpunktfrequenz ($f_{dc}$), einer interferometrischen Phase ($\hat{\phi}$) und einer Kohärenz (p), die alle aus einem jeweiligen Paar von ersten und zweiten SLC-Erfassungen ($s_1$, $s_2$) erhalten werden, und wobei das datengestützte Modell dazu eingerichtet ist, eine Null-Doppler-Phase ($\phi_{zd}$) zu bestimmen, die den Phasenbeitrag darstellt, der der Deformation zugeordnet ist, die eine Null-Doppler-LOS-Variation verursacht, eine Along-Track-Phase ($\phi_{at}$) zu bestimmen, die den Phasenbeitrag darstellt, der der Deformation in einer Along-Track-Richtung zugeordnet ist, und eine Schätzung einer zugeordneten Along-Track-Oberflächenbewegung ($u_{at}$) zu bestimmen, wobei die Erzeugung des datengestützten Modells die folgenden Schritte umfasst:

- Erzeugen eines synthetischen Trainingsdatensatzes (TDS), der eine Vielzahl von Interferogrammen ($\Gamma$) umfasst, von denen jedes durch ein Paar einer ersten und einer zweiten SLC-Erfassung ($s_1$, $s_2$) gebildet wird, indem eine modellbasierte und externe 3D-Deformation in eine gegebene erste SLC-Erfassung ($s_1$) induziert

wird, um die zugehörige zweite SLC-Erfassung ($s_2$) zu erhalten, die sich auf einen Zeitpunkt nach einem Deformationsereignis bezieht, und durch Anwenden eines umgekehrten Ansatzes, der durch eine gegebene Kohärenz ($\rho$) und eine rauschfreie interferometrische Phase ($\phi_{theo}$) nach dem Deformationsereignis spezifiziert ist;

- Trainieren eines neuronalen Netzwerks (NN) mit dem Trainingsdatensatz (TDS), wobei das neuronale Netzwerk (NN) einen Eingang zur Eingabe der Mehrzahl von Interferogrammen ($\Gamma$) und einen Ausgang zur Ausgabe der Along-Track-Phase ($\phi_{at}$), der Null-Doppler-Phase ($\phi_{zd}$) und der zugeordneten Along-Track-Oberflächenbewegung ($u_{at}$) für die Vielzahl von Interferogrammen ($\Gamma$) umfasst, wobei das trainierte neuronale Netz (NN) das erzeugte datengestützte Modell darstellt.

2. Verfahren nach Anspruch 1, wobei zur Erzeugung des synthetischen Trainingsdatensatzes (TDS) die erste und zweite SLC-Erfassung ($s_1$, $s_2$) definiert sind durch:

$$\begin{cases} s_1 = A_0 w_1 \\ s_2 = s_1 \rho^* e^{j\phi_{theo}} + A_0 w_2 \sqrt{1 - \rho^2} \end{cases}$$

wobei

$s_1$ und $s_2$ die coregistrierten ersten und zweiten SLC-Erfassungen sind,
$A_0$ eine rauschfreie Amplitude ist,
$\rho$ die gegebene Kohärenz ist,
$w_1$ und $w_2$ unabhängige zirkuläre komplexe Standard-Gauß-Variablen sind und $\phi_{theo}$ die rauschfreie Wrapped-Phase-Summe der Null-Doppler-Phase ($\phi_{zd}$) und der Along-Track-Phase ($\phi_{at}$), die zwei Deformationen darstellen.

3. Verfahren nach Anspruch 2, wobei die rauschfreie Wrapped-Phase-Summe ($\phi_{theo}$) bestimmt wird durch:

$$\phi_{theo} = mod_{2\pi}(\phi_{zd} + \phi_{at}).$$

4. Verfahren nach Anspruch 3, wobei die Along-Track-Phase ($\phi_{at}$) der Phasenbeitrag ist, der der Deformation in der Along-Track-Richtung zugeordnet ist, definiert durch:

$$\phi_{zd} = \frac{4\pi}{\lambda} \left[ \sin(\theta_{inc}) \sin(\theta_N) u_E + \sin(\theta_{inc}) \cos(\theta_N) u_N - \cos(\theta_{inc}) u_U \right]$$

wobei

$f_{dc}$ die Doppler-Schwerpunktfrequenz ist und
$v_g$ eine Bodengeschwindigkeit des SAR-Systems ist.

5. Verfahren nach Anspruch 4, wobei ausgehend von der geschätzten interferometrischen Phase ($\hat{\phi}$), die aus dem Paar der ersten und zweiten SLC-Erfassungen ($s_1$, $s_2$) berechnet wird, durch

$$\hat{\phi} = \angle E\{s_1 s_2^*\}$$

die Null-Doppler-Phase ($\phi_{zd}$) und die Along-Track-Phase ($\phi_{at}$) voneinander getrennt werden, wobei

$E\{\cdot\}$ eine mathematische Erwartung ist,
* den komplexen Konjugations-Operator angibt und
$\angle(\cdot)$ einen Winkeloperator bezeichnet.

6. Verfahren gemäß einem der vorhergehenden Ansprüche, wobei die modellbasierte und externe 3D-Deformation in einem East-North-Up (ENU)-Koordinatensystem, wie es vom SAR-System verwendet wird, durch externe und modellbasierte Quellen bereitgestellt werden, die allgemeine Oberflächendeformationsbereiche sowohl in Landeis- als auch in Festlandszenarien darstellen, wobei die synthetischen Oberflächendeformationen in die Null-Doppler-Phase ($\phi_{zd}$) und die Along-Track-Phase ($\phi_{at}$) induziert werden.

**7.** Verfahren gemäß einem der vorhergehenden Ansprüche, wobei die Erzeugung der Interferogramme ($\Gamma$) Burst für Burst durch Anwendung von Standard-Multilooking durch einen Maximum-Likelihood-Schätzer und Verwendung eines gleitenden Durchschnitts mit einem quadratischen Fenster $\Omega$ ausgeführt wird.

**8.** Verfahren nach Anspruch 7, wobei eine Burst-Merging-Operation durchgeführt wird, die ein kontinuierliches Bild in Bezug auf die Azimutzeit erzeugt, indem redundante Linien zwischen Bursts (Überlappungen) entfernt werden.

**9.** Verfahren nach Anspruch 7 oder 8, wobei auf den Schritt der Erzeugung des synthetischen Trainingsdatensatzes (TDS) die Erzeugung von Patches mit einer durch eine Auswahl des Fensters ($\Omega$) definierten Dimension folgt, wenn Multilooking auf das Interferogramm ($\Gamma$) angewendet wird.

**10.** Verfahren nach einem der vorhergehenden Ansprüche, wobei das neuronale Netz (NN) ein faltendes neuronales Netz (500) mit Multitask-Lernen, MTL-CNN, ist.

**11.** Verfahren nach Anspruch 10, wobei das MTL-CNN (500) auf dem U-net-Modell basiert, das sowohl im Encoder (510) als auch im Decoder (521, 531) drei Schichten verwendet.

**12.** Verfahren nach Anspruch 10 oder 11, wobei dem Encoder (510) eine Brückenschicht (514) und zwei Zweige folgen, die jeweils einen dreischichtigen Dekodierungspfad (520, 530) mit Sprungverbindungen (540, 550) umfassen.

**13.** Verfahren nach Anspruch 12, wobei ein erster Zweig (520) zuerst die Real- und Imaginärteile der Along-Track-Phase ($\{\xi_{zd}^{Re}, \xi_{zd}^{Im}\}$) vorhersagt und dann die vorhergesagte Along-Track-Phase und die interferometrische Phase, die den Real- und Imaginärteilen ($\{\xi_{zd}^{Re}, \xi_{zd}^{Im}\}$) einer ersten Sprungverbindung (540) zugeordnet sind, verwendet, um die Null-Doppler-Phase und ihre Real- und Imaginärteile ($\{\xi_{zd}^{Re}, \xi_{zd}^{Im}\}$) vorherzusagen.

**14.** Verfahren nach Anspruch 12 oder 13, wobei die normalisierte Doppler-Schwerpunktfrequenz ($f_{dc}^{norm}$) als Eingabe für den zweiten Zweig (530) verwendet wird, um eine RMSE-Regularisierung auf die Along-Track-Phase anzuwenden, die im ersten Zweig (520) geschätzt wird, und auf dieselbe Größe, die ausgehend von der Along-Track-Deformation im zweiten Zweig (530) geschätzt wird.

**15.** Verfahren gemäß einem der Ansprüche 12 bis 14, wobei die vorhergesagte Along-Track-Phase mit derselben Phase verglichen wird, die sich aus dem Ausgang des zweiten Zweigs (530) ergibt, um die Along-Track-Deformation ($u_{at}$) zu bestimmen.

**16.** Verfahren zur rechnergestützten Verarbeitung von digitalen SAR-Daten, die aus einer Vielzahl von Interferogrammen ($\Gamma$) bestehen, wobei jedes von ihnen aus einer ersten SLC-Erfassung ($s_1$) eines SAR-Systems zu einem ersten Zeitpunkt und einer zweiten SLC-Erfassung ($s_2$) des SAR-Systems zu einem zweiten Zeitpunkt, der später als der erste Zeitpunkt ist, erhalten wird, und einer Doppler-Schwerpunktfrequenz ($f_{dc}$), einer interferometrischen Phase ($\hat{\phi}$) und einer Kohärenz ($\hat{\rho}$), die alle aus einem jeweiligen Paar von ersten und zweiten SLC-Erfassungen ($s_1, s_2$) erhalten werden, wobei eine Null-Doppler-Phase ($\phi_{zd}$) der Phasenbeitrag ist, der der Deformation zugeordnet ist, die eine Null-Doppler-LOS-Variation verursacht, eine Along-Track-Phase ($\phi_{at}$) der Phasebeitrag ist, der der Deformation in einer Along-Track-Richtung zugeordnet ist, und eine Schätzung einer verbundenen Along-Track-Oberflächenbewegung ($u_{at}$) mit einem datengestützten Modell erzeugt wird, das mit einem Verfahren gemäß einem der Ansprüche 1 bis 15 erzeugt wird.

**17.** Vorrichtung zur rechnergestützten Verarbeitung von digitalen SAR-Daten, die aus einer Vielzahl von Interferogrammen ($\Gamma$) bestehen, wobei jedes von ihnen aus einer ersten SLC-Erfassung ($s_1$) eines SAR-Systems zu einem ersten Zeitpunkt und einer zweiten SLC-Erfassung ($s_2$) des SAR-Systems zu einem zweiten Zeitpunkt, der später als der erste Zeitpunkt ist, erhalten wird, und einer Doppler-Schwerpunktfrequenz ($f_{dc}$), einer interferometrischen Phase

($\hat{\phi}$) und einer Kohärenz ($\hat{\rho}$), die alle aus einem jeweiligen Paar von ersten und zweiten SLC-Erfassungen ($s_1$, $s_2$) erhalten werden, wobei die Vorrichtung ein datengestütztes Modell umfasst, das durch ein Verfahren gemäß einem der Ansprüche 1 bis 15 erzeugt ist.

18. Computerprogrammprodukt, das einen auf einem maschinenlesbaren Medium gespeicherten Programmcode umfasst, zur Ausführung eines Verfahrens gemäß einem der Ansprüche 1 bis 15, wenn der Programmcode auf einem Computer ausgeführt wird.

Fig. 1

EP 4 517 382 A1

Fig. 2

Fig. 3

Fig. 4

Fig. 5

501  502  503  504  505  507  508

IN

CONV 9x9  BN  CONV 9x9  BN  OUT

506

CONV 1x1

Residualblock

ReLU Aktivierungsfkt.  CONV Convolution block

Addition  BN  Batch Normalisierungsblock

500

EP 4 517 382 A1

Fig. 6

Fig. 7

20

Europäisches
Patentamt

European
Patent Office

Office européen
des brevets

# EUROPÄISCHER RECHERCHENBERICHT

**Nummer der Anmeldung**

EP 24 19 6113

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GONG FAMING ET AL: "Retrieve Ice Velocities and Invert Spatial Rigidity of the Larsen C Ice Shelf Based on Sentinel-1 Interferometric Data", REMOTE SENSING, Bd. 13, Nr. 12, 17. Juni 2021 (2021-06-17), Seite 2361, XP093239878, CH ISSN: 2072-4292, DOI: 10.3390/rs13122361 * das ganze Dokument * | 1-18 | INV. G01S13/90 |
| A,D | SCHEIBER ROLF ET AL: "Speckle Tracking and Interferometric Processing of TerraSAR-X TOPS Data for Mapping Nonstationary Scenarios", IEEE JOURNAL OF SELECTED TOPICS IN APPLIED EARTH OBSERVATIONS AND REMOTE SENSING, IEEE, USA, Bd. 8, Nr. 4, 1. April 2015 (2015-04-01), Seiten 1709-1720, XP011582359, ISSN: 1939-1404, DOI: 10.1109/JSTARS.2014.2360237 [gefunden am 2015-05-22] * das ganze Dokument * | 1-18 | |
| A,D | PRATS-IRAOLA PAU ET AL: "Interferometric investigations with the Sentinel-1 constellation", 2017 IEEE INTERNATIONAL GEOSCIENCE AND REMOTE SENSING SYMPOSIUM (IGARSS), IEEE, 23. Juli 2017 (2017-07-23), Seiten 5537-5540, XP033275724, DOI: 10.1109/IGARSS.2017.8128258 [gefunden am 2017-12-01] * das ganze Dokument * | 1-18 | RECHERCHIERTE SACHGEBIETE (IPC)<br><br>G01S |

-/--

Der vorliegende Recherchenbericht wurde für alle Patentansprüche erstellt

| Recherchenort | Abschlußdatum der Recherche | Prüfer |
|---|---|---|
| München | 16. Januar 2025 | Rudolf, Hans |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
  Dokument

EPO FORM 1503 03.82 (P04C03)

Seite 1 von 2

**EUROPÄISCHER RECHERCHENBERICHT**

**Nummer der Anmeldung**

EP 24 19 6113

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MA ZHANGFENG ET AL: "Co-registration of Image Stacks for Sentinel-1A TOPS Mode Based on Dijkstra's Algorithm", GEOMATICS AND INFORMATION SCIENCE OF WUHAN UNIVERSITY, WUHAN DAXUE, CN, Bd. 45, Nr. 6, 30. Juni 2020 (2020-06-30), Seiten 904-913, XP009548111, ISSN: 1671-8860, DOI: 10.13203/J.WHUGIS20180412 [gefunden am 2019-12-01] * das ganze Dokument * ----- | 1-18 | |
| A | YAGUE-MARTINEZ NESTOR ET AL: "Accurate Azimuth Ground Deformation Estimation From Sentinel-1 Time Series", IEEE GEOSCIENCE AND REMOTE SENSING LETTERS, Bd. 19, 1. Januar 2022 (2022-01-01), Seiten 1-5, XP093239962, USA ISSN: 1545-598X, DOI: 10.1109/LGRS.2022.3160763 * das ganze Dokument * ----- | 1-18 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 16. Januar 2025 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. SCHEIBER** ; **M. JÄGER** ; **P. PRATS-IRAOLA** ; **F. DE ZAN** ; **D. GEUDTNER**. Speckle Tracking and Interferometrie Processing of TerraSAR-X TOPS Data for Mapping Nonstationary Scenarios. *IEEE Journal of Selected Topics in Applied Earth Observations and Remote Sensing*, 2015, vol. 8 (4), 1709-1720
- **P. PRATS-IRAOLA** ; **M. NANNINI** ; **N. YAGUE-MARTINEZ** ; **M. PINHEIRO** ; **J.-S. KIM** ; **F. VECCHIOLI** ; **F. MINATI** ; **M. COSTANTINI** ; **S. BORGSTROM** ; **P. DE MARTINO**. Interferometric investigations with the Sentinel-1 constellation. *2017 IEEE International Geoscience and Remote Sensing Symposium (IGARSS)*, 2017, 5537-5540
- **R. GRANDIN** ; **E. KLEIN** ; **M. METOIS** ; **C. VIGNY**. Three-dimensional displacement field of the 2015 Mw8.3 Illapel earthquake (Chile) from across- and along-track Sentinel-1 TOPS interferometry. *Geophysical Research Letters*, 2016, vol. 43 (6), 2552-2561
- **J. K. ANDERSEN** ; **A. KUSK** ; **J. P. MERRYMAN BONCORI** ; **C. S. HVIDBERG** ; **A. GRINSTED**. Improved Ice Velocity Measurements with Sentinel-1 TOPS Interferometry. *Remote Sensing*, vol. 12 (12), 2020
- **A. KUSK** ; **J. K. ANDERSEN** ; **J. P. MERRYMAN BONCORI**. Sentinel-1 TOPS Interferometry for Ice Flow Mapping. *EUSAR 2021; 13th European Conference on Synthetic Aperture Radar*, 2021, 1-5
- **A. SOLGAARD** ; **A. KUSK** ; **J. P. MERRYMAN BONCORI** ; **J. DALL** ; **K. D. MANKOFF** ; **A. P. AHLSTRØM** ; **S. B. ANDERSEN** ; **M. CITTERIO** ; **N. B. KARLSSON** ; **K. K. KJELDSEN**. Greenland ice velocity maps from the PROMICE project. *Earth System Science Data*, 2021, vol. 13 (7), 3491-3512

- **Y. OKADA**. Surface deformation due to shear and tensile faults in a halfspace. *Bulletin of the Seismological Society of America*, August 1985, vol. 75 (4), 1135-1154
- Global Positioning Systems, Inertial Navigation, and Integration: Second Edition. **M. GREWAL** ; **L. WEILL** ; **A. ANDREWS**. Appendix C: Coordinate Transformations. John Wiley Sons, Ltd, February 2007, 456-501
- **J.-S. LEE** ; **K. PAPATHANASSIOU** ; **T. AINSWORTH** ; **M. GRÜNES** ; **A. REIGBER**. A new technique for noise filtering of SAR interferometric phase images. *IEEE Transactions on Geoscience and Remote Sensing*, 1998, vol. 36 (5), 1456-1465
- **M. BOURBIGOT** ; **H. JOHNSEN** ; **R. PIANTANIDA**. Sentinel Product Definition. *European Space Agency (ESA), Tech. Rep. S1-RSMDA-52-7440*, March 2016, https://sentinel.esa.int/documents/247904/1877131/Sentinel-1 -Product-Definition
- **N. YAGÜE-MARTINEZ** ; **P. PRATS-IRAOLA** ; **F. RODRIGUEZ GONZALEZ** ; **R. BRCIC, R. SHAU** ; **D. GEUDTNER** ; **M. EINEDER** ; **R. BAMLER**. Interferometrie Processing of Sentinel-1 TOPS Data. *IEEE Transactions on Geoscience and Remote Sensing*, 2016, vol. 54 (4), 2220-2234
- Neural Networks: Tricks of the Trade. **Y. A. LECUN** ; **L. BOTTOU** ; **G. B. ORR** ; **K.-R. MÜLLER**. Efficient BackProp. Springer, 2012, 9-48
- **K. HE** ; **X. ZHANG** ; **S. REN** ; **J. SUN**. Deep residual learning for image recognition. *2016 IEEE Conference on Computer Vision and Pattern Recognition (CVPR)*, 2016, 770-778